# EUROPEAN PATENT SPECIFICATION

(11) **EP 4 107 423 B1**
(45) Date of publication and mention of the grant of the patent: **20.12.2023**
(21) Application number: 21717198.2
(22) Date of filing: 17.02.2021
(51) Int. Cl.: F17C 13/12

(54) **FLANGE ASSEMBLY FOR A PRESSURE TANK**
FLANSCHANORDNUNG FÜR EINEN DRUCKBEHÄLTER
ENSEMBLE BRIDE POUR UN RÉSERVOIR SOUS PRESSION

(30) Priority: 21.02.2020 IT 202000003683
(43) Date of publication of application: 28.12.2022
(73) Proprietor: OMB Saleri S.p.A. - Societa' Benefit, 25126 Brescia (IT)
(72) Inventor: BONETTI, Michele, 25126 Brescia (IT)
(74) Representative: Pulieri, Gianluca Antonio
(86) International application number: PCT/IB2021/051325
(87) International publication number: WO 2021/165843

(56) References cited:
- WO-A1-2020/225262
- DE-A1-102015 015 004
- GB-A- 1 310 540
- JP-A- 2007 106 262
- US-A- 4 059 125
- US-A- 5 107 900
- US-A1- 2008 171 248
- US-A1- 2012 175 366
- US-A1- 2013 082 054
- US-A1- 2015 252 911

## Description

The present invention belongs to the field of components for electric traction motor vehicles, and in particular to the field of components for fuel cell hydrogen power systems, installed on board the vehicle for producing electricity for vehicle traction.

Such systems include a hydrogen tank in which the gas is stored at high pressure; the tank, which generally has the shape of a cylinder, is provided with one or two flanges (referred to as "bosses", in jargon), one at each end. A multifunction valve (sometimes referred to as OTV - On Tank Valve - or GHV - Gas Handling Valve) is applied to one of such flanges.

Such a valve regulates, for example, the injection of gas into the tank for the supply and the delivery to the user assemblies, and usually includes some safety systems. For example, it is common for such a valve to be provided with a thermal safety system which provides for the sudden escape of the gas when the temperature of the tank or of a surrounding region exceeds a threshold value.

The design and production of such a valve are
rather complicated, since it integrates several functions in a single component, maintaining a very small size, such as to allow the application thereof to the tank flange.

It is the object of the present invention to provide a flange for a hydrogen tank which allows to improve such conditions. To this end, as it will be apparent from the description below, a flange according to the present invention integrates a thermal safety device, so that the OTV valve, to be applied on the same flange or on the other flange of the tank, has a simplified configuration.

Such an object is achieved by a flange manufactured according to claim 1. The dependent claims identify further advantageous embodiments of the invention.

The features and advantages of the flange according to the present invention will become apparent from the following description, given by way of a non-limiting example, according to the Figures of the accompanying drawings, in which:

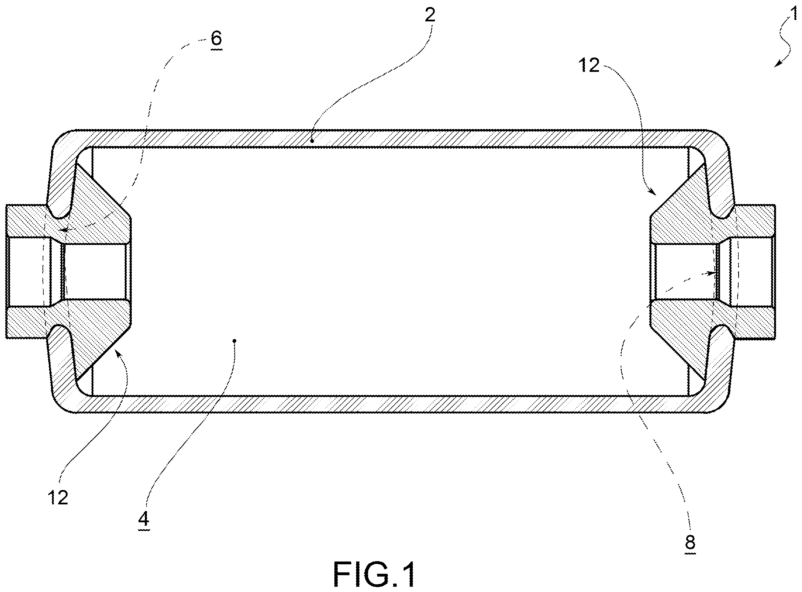

- Figure 1 shows a tank provided with two flange bodies according to an embodiment of the present invention;

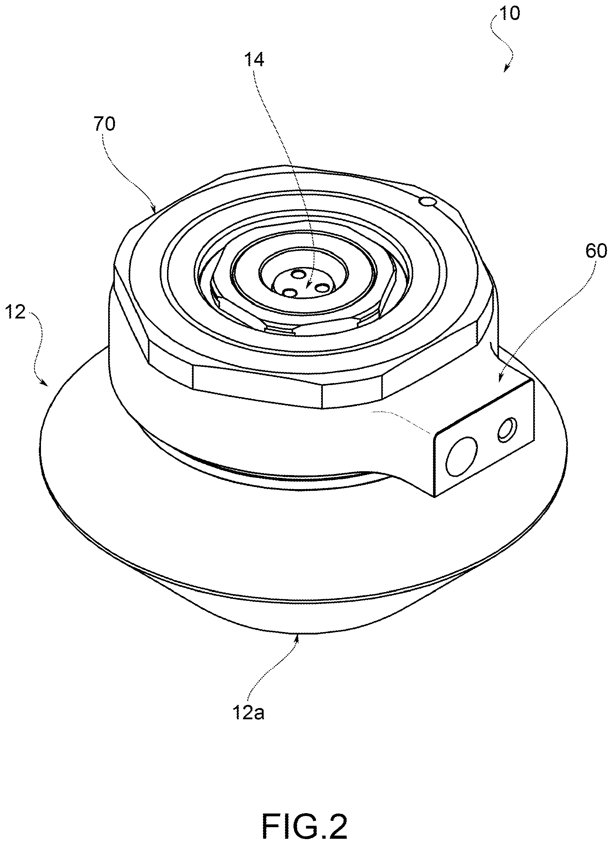

- Figure 2 shows a flange assembly according to an
   embodiment of the present invention;

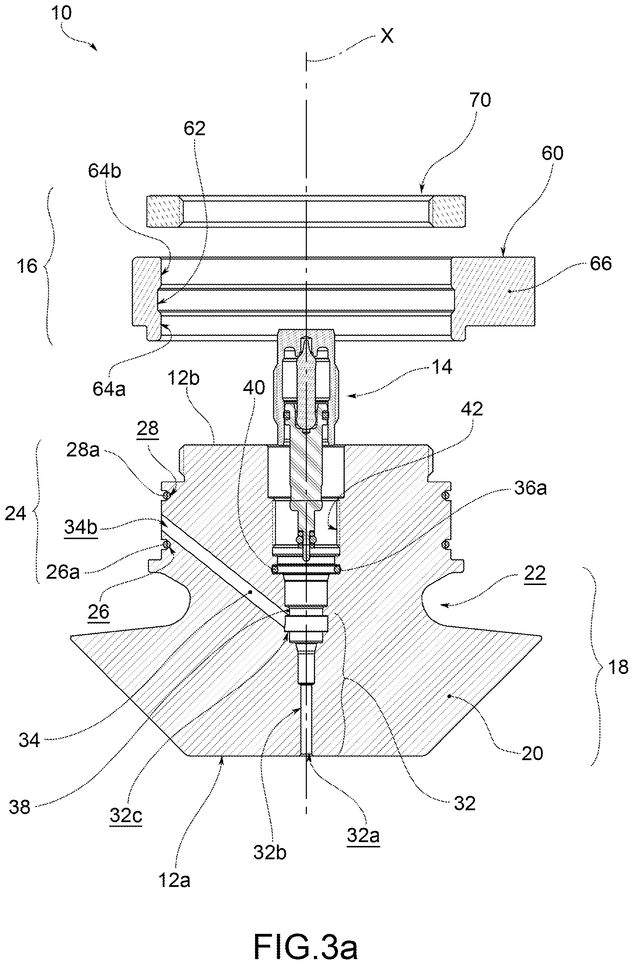

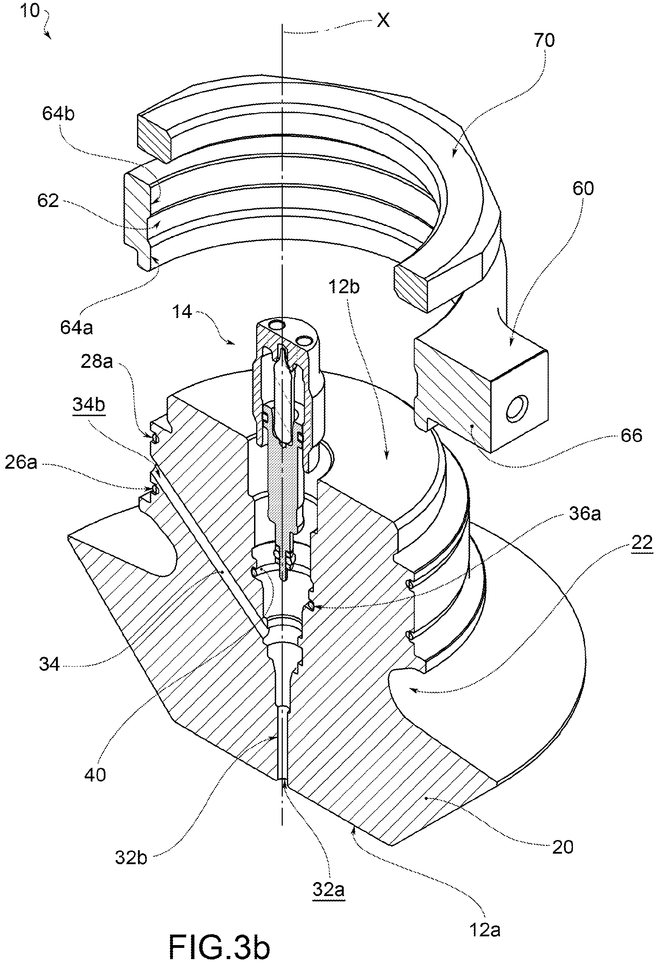

- Figures 3a and 3b show sections with separate parts of the flange assembly in Figure 2;

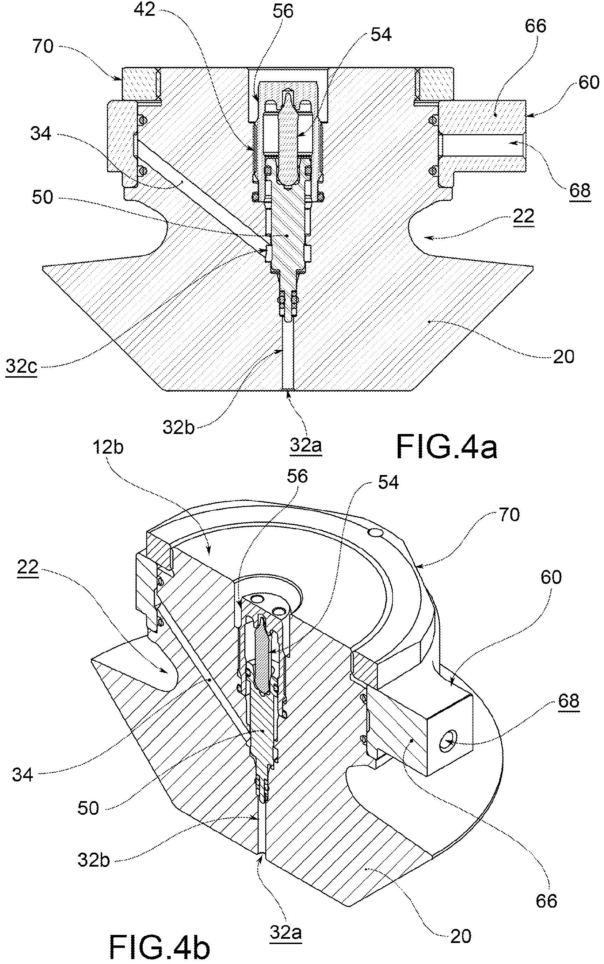

- Figures 4a and 4b show sections of the flange assembly in Figure 2;
- Figure 5 shows the flange assembly of the present invention, according to an embodiment.

With reference to the Figures of the accompanying drawings, reference numeral 1 overall indicates a tank for storing high pressure hydrogen, intended for the installation on board a vehicle, for example a motor vehicle, a bus, or a commercial vehicle for the transport of goods. For example, the tank is adapted to store hydrogen at pressures of 350 bar or 700 bar, or even higher.

According to an embodiment, the tank 1 comprises a tank wall 2, which delimits a tank compartment 4, provided with a first tank mouth 6 and, preferably, a second tank mouth 8.

The tank 1 further comprises at least one flange assembly 10, sealingly applied to at least one of said tank mouths 6, 8.

According to an embodiment, the tank 1 includes two tank mouths 6, 8 and a single flange assembly 10 applied on one of said tank mouths 6, 8; a cap (not shown) is instead applied to the other tank mouth 8, 6.

The flange assembly 10 comprises a flange body 12, a thermal safety device 14 and a collar assembly 16.

The flange body 12, preferably in a single piece, for example of aluminum, extends along a body axis X, between an inner end 12a, facing the tank compartment 4, and an outer end 12b, facing the external environment.

The flange body 12 comprises a connection portion 18 for the connection to the tank mouth 6, 8 of the tank 1. For example, the connection portion 18 has an axially symmetrical, preferably frusto-conical connection wall 20, and a slot 22 next to the connection wall, for housing the bundles of fibers used for winding the tank wall 2.

The flange body 12 further comprises a functional portion 24, adjacent to the connection portion 18 and consisting of a wall which, once the flange body 12 has been applied to the tank 1, emerges outside the tank mouth 6, 8.

Preferably, the functional portion 24 has two axially spaced annular sealing seats 26, 28; said sealing seats 26, 28 house each an O-ring 26a, 28a, adapted to provide a seal against the escape of pressurized hydrogen.

Preferably, the functional portion 24 also has a thread 30 at the outer end 12b.

The flange body 12 has a main duct adapted to place the internal compartment 4 of the tank 1 in communication with the external environment. For example, the main duct has a first section 32, having an extension along a first section axis, starting from the inner end 12a with an inner port 32a, and a second section 34, having an extension along a second section axis, connected to the first section 32, and emerging outside with an outer port 34b placed on the functional portion 24.

Preferably, said outer port 34b is arranged between the sealing seats 26, 28 of the functional portion 24.

For example, the first section 32 is placed along the central axis of the flange body 12, while the second section 34 intercepts the first section 32 and is inclined with respect to said central axis.

According to an embodiment, the first section 32 has a sealing section 32b having a first diameter, and a transit section 32c, connected to the second section 34, having a second diameter, larger than the first diameter of the sealing section 32b.

Furthermore, the flange body 12 preferably has a mounting seat 36 which extends from the first section 32 along the first section axis, for example the central axis, and opens outwards on the external end 12b.

The mounting seat 36 preferably comprises an annular protrusion 38, radially projecting internally, adapted to provide a guide for sliding a piston, arranged, for example, so as to axially delimit the transit section 32c.

Furthermore, the mounting seat 36 preferably has a sealing seat 36a where an O-ring 40, adapted to provide a gas leak seal, is housed.

Finally, preferably, the mounting seat 36 comprises a threaded section 42.

The thermal safety device 14 is housed in the flange body 12 and operates in the main duct so that:
- in a first configuration or resting configuration, it prevents hydrogen from passing from the first section 32 to the second section 34, and
- in a second configuration or active configuration, it creates a passage between the first section 32 and the second section 34, so as to allow the transit of hydrogen to the external environment.

Said thermal safety device is temperature sensitive and is adapted to switch from the resting configuration to the active configuration when a reference temperature exceeds a predefined threshold value.

For example, the thermal safety device 14 comprises
- a piston 50 having a functional portion 52 which sealingly slides in the sealing section 32b of the first section 32;
- a temperature sensitive component 54, for example a bulb, calibrated to yield, for example by breaking, when the reference temperature exceeds the predefined threshold value; the component 54 is arranged in contact with the piston 50, on the opposite side of the functional portion 52;
- a fixed abutment 56, fixed to the flange body 12 so as to keep the component 54 in contact with the piston 50; for example, the fixed abutment 56 is screwed onto the threaded section 42 of the mounting seat 36 of the flange body 12.

During the normal use of the tank, in the resting configuration of the thermal safety device 14, the hydrogen is stored in the high pressure internal compartment 4, for example at 700 bar.

The gas pressure, through the inner port 32a and the sealing section 32b of the first section 32, acts on an area of the functional portion 52 of the piston 50, carrying out an action which tends to make the piston exit the mounting seat 36. However, the component 54, which is intact or resistant, since the reference temperature is below the threshold value, is in contact with the piston 50 and with the fixed abutment 56, and opposes the translation of the piston 50.

When the reference temperature exceeds the threshold value, the thermal safety device 14 switches to the active configuration, in which the component 54 is yielding or broken. In such a circumstance, the action of the gas pressure acting on the piston 50 causes the translation of said piston 50; the translation of the piston 50 creates a passage between the sealing section 32b and the transit section 32c, so that the gas transits through the second section 34 of the main duct and escapes from the outer port 34b.

The collar assembly 16 of the flange assembly 10 is adapted to direct the gas flow exiting the outer port 34b.

For example, the collar assembly 16 comprises a collar 60 consisting of an annular wall internally having an annular groove 62, lowered radially with respect to two sealing surfaces 64a, 64b which axially flank it.

The collar 60 further comprises a nozzle 66 having an outlet passage 68 towards the external environment, in communication with the groove 62.

The collar 60 is fitted on the functional portion 24 of the flange body 12, in an orientable manner; the groove 62 is thus placed at the outer port 34b, while the sealing surfaces 64a, 64b act as a seal with the O-rings 26a, 26b.

The collar assembly 16 further comprises a ring 70, which is screwable at the outer end 12b of the flange body 12 to lock the collar 60.

According to an embodiment, the first section of the main duct and the mounting seat for the thermal safety device are provided in an offset position with respect to the central axis of the flange body.

According to an embodiment, the flange body includes an additional through hole, for the further application of a multifunction valve for managing the gas supply and delivery (OTV valve).

According to a still further embodiment, a first flange only includes a through hole for the application of a multifunction valve for managing the gas supply and delivery (OTV valve), while another flange body is provided as described above.

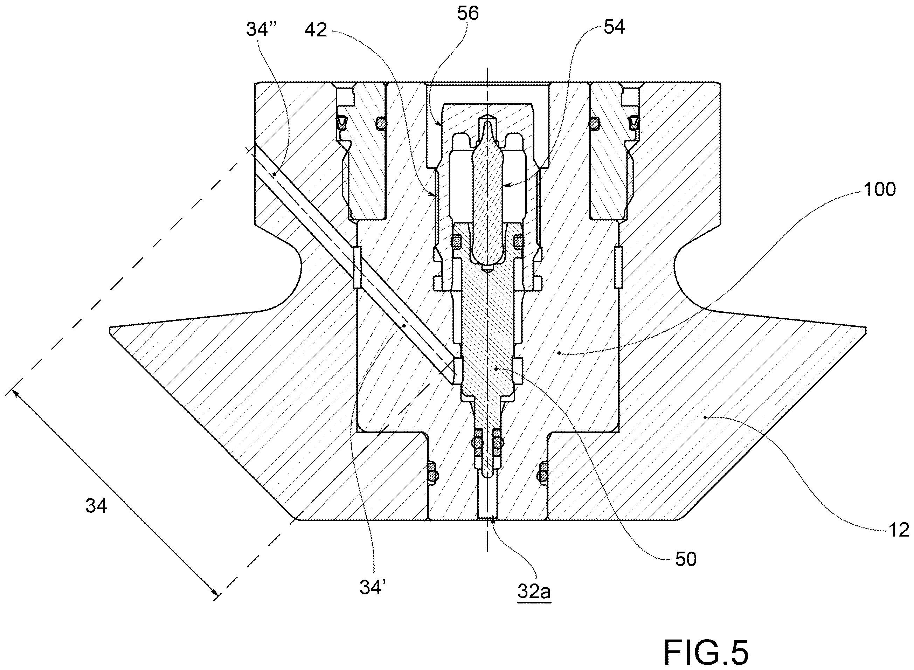

According to an embodiment (Figure 5), the flange body includes a through hole in which a cartridge body 100 is insertable, having a main duct and a mounting seat as described above, in which the thermal safety device is housed. In such an alternative embodiment, a section 34' of the second section 34 is provided in the cartridge body 100 and a remaining section 34" in the flange body 12.

Innovatively, the flange assembly according to the present invention includes a thermal safety device, so that the multifunction valve may be designed without such a safety device, making it simpler to design and manufacture.

It is apparent that, in order to meet contingent needs, those skilled in the art may make changes to the above-described flange assembly, all contained within the scope of protection as defined by the following claims.

## Claims

1. A flange assembly (10) which is applicable to a tank mouth (6, 8) of a high pressure hydrogen tank, comprising a flange body (12) and a thermal safety device (14) calibrated to a predefined threshold value of a reference temperature, wherein the flange body (12) has a main duct (32, 34) configured to put a tank compartment (4) of the tank (1) in communication with the environment outside the tank (1) through an outer port (34b) placed on a functional portion (24) of the flange body (12) and the thermal safety device (14) is at least partially housed in said main duct, so that
- in a resting configuration, in which the reference temperature is lower than the predefined threshold value, said thermal safety device intercepts the main duct and prevents the gas from transiting to the external environment;
- in an activation configuration, in which the reference temperature is higher than the predefined threshold value, the thermal safety device (14) creates a passage in the main duct (32, 34) for the gas to transit towards the external environment through the outer port (34b); **characterized in that** it further comprises a collar assembly (16) which intercepts the outer port (34b) and is orientable to direct the gas flow exiting the outer port 34b.

2. A flange assembly (10) according to claim 1, wherein the main duct (32, 34) has a first section (32) which starts from an inner end (12a) of the flange body (12) with an inner port (32a), and a second section (34), connected to the first section (32) and emerging outside with said outer port (34b) placed on the functional portion (24) of the flange body (12).

3. A flange assembly according to claim 2, wherein the functional portion (24) has two axially spaced, annular sealing seats (26, 28) in which respective O-rings (26a, 28a) are housed and wherein said outer port (34b) is arranged between the sealing seats (26, 28).

4. A flange assembly according to claim 3, wherein the collar assembly (16) comprises a collar (60) which can be fitted on the functional portion (24) in an orientable manner, provided with a groove (62) which intercepts the outer port (34b) and a nozzle (66) provided with an outlet passage (68) towards the external environment.

5. A flange assembly according to any one of the preceding claims and claim 2, wherein the first section (32) extends along a first section axis and the second section (34) extends along a second section axis, incident to the first section axis.

6. A flange assembly according to claim 5, wherein the first section (32) comprises a sealing section (32b) having a first diameter and a transit section (32c) having a second diameter, wherein the second diameter is greater than the first diameter.

7. A flange assembly according to claim 5 or 6, wherein the flange body (12) has a mounting seat (36) which extends along said first section axis up to lead into the external environment.

8. A flange assembly according to claims 6 and 7, wherein the thermal safety device (14) comprises:
- a piston (50) having a functional portion (52) which sealingly slides in the sealing section (32b) of the first section (32);
- a temperature sensitive component (54), calibrated to yield when the reference temperature exceeds the predefined threshold value, said component (54) being arranged in contact with the piston (50), on the opposite side of the functional portion (52);
- a fixed abutment (56), fixed to the flange body (12) so as to keep the component (54) in contact with the piston (50) .

9. A flange assembly according to any one of the preceding claims and claim 7 and including an extractable cartridge body, wherein:
- the first section (32) of the main duct and the mounting seat (36) are obtained in the extractable cartridge body, which is insertable into a through hole of the flange body (12);
- the second section (34) of the main duct is at least partially created in the flange body (12).

10. A flange assembly according to any one of the preceding claims, wherein the flange body (12) comprises a connection portion (18) for the connection to the tank mouth (6, 8) of the tank (1), comprising a connection wall (20) and a slot (22) next to the connection wall (20) .

11. A tank (1) for storing high pressure hydrogen on board vehicles, comprising:
- a first mouth (6); and
- a flange assembly (10) according to any one of the preceding claims, applied to the first mouth (6).

12. A tank according to claim 11, wherein the flange body (12) of the flange assembly (10) has a further through hole for the application of a multifunction valve.

13. A tank according to claim 11, comprising:
- a second mouth (8); and
- a flange for the application of a multifunction valve, applied to the second mouth (8).

## Patentansprüche

1. Flanschanordnung (10), die an einer Tanköffnung (6, 8) eines Hochdruck-Wasserstofftanks anwendbar ist, umfassend einen Flanschkörper (12) und eine thermische Sicherheitsvorrichtung (14), die auf einen vordefinierten Schwellenwert einer Referenztemperatur kalibriert ist, wobei der Flanschkörper (12) einen Hauptkanal (32, 34) aufweist, der konfiguriert ist, einen Tankraum (4) des Tanks (1) über einen äußeren Anschluss mit der Umgebung außerhalb des Tanks (1) in Verbindung mit der Umgebungsaußenseite des Tanks (1) zu versetzen, und zwar durch einen äußeren Anschluss (34b), der auf bzw. an einem Funktionsabschnitt (24) des Flanschkörpers (12) platziert ist, und die thermische Sicherheitsvorrichtung (14) zumindest teilweise in diesem Hauptkanal untergebracht ist, sodass
- in einer Ruhekonfiguration, in der die Referenztemperatur niedriger als der vordefinierte Schwellenwert ist, die thermische Sicherheitsvorrichtung den Hauptkanal abschneidet bzw. unterbricht und verhindert, dass das Gas in die äußere Umgebung gelangt;
- in einer Aktivierungskonfiguration, in der die Referenztemperatur höher als der vordefinierte Schwellenwert ist, die thermische Sicherheitsvorrichtung (14) einen Durchgang in dem Hauptkanal (32, 34) erzeugt, durch den das Gas in die äußere Umgebung durch den äußeren Anschluss (34b) gelangt;
**dadurch gekennzeichnet, dass** sie ferner eine Kragenanordnung (16) umfasst, die den äußeren Anschluss (34b) abschneidet bzw. unterbricht und so ausrichtbar ist, dass sie den aus dem äußeren Anschluss 34b austretenden Gasstrom lenkt.

2. Flanschanordnung (10) nach Anspruch 1, wobei der Hauptkanal (32, 34) einen ersten Abschnitt (32), der von einem inneren Ende (12a) des Flanschkörpers (12) mit einem inneren Anschluss (32a) startet, und einen zweiten Abschnitt (34) aufweist, der mit dem ersten Abschnitt (32) verbunden ist und nach außen mündet, wobei der äußere Anschluss (34b) an bzw. auf dem Funktionsabschnitt (24) des Flanschkörpers (12) platziert ist.

3. Flanschanordnung nach Anspruch 2, wobei der Funktionsabschnitt (24) zwei axial beabstandete, ringförmige Dichtungssitze (26, 28) aufweist, in denen jeweilige O-Ringe (26a, 28a) untergebracht sind, und wobei der äußere Anschluss (34b) zwischen den Dichtungssitzen (26, 28) angeordnet ist.

4. Flanschanordnung nach Anspruch 3, wobei die Kragenbaugruppe (16) einen Kragen (60), der auf den Funktionsabschnitt (24) auf eine ausrichtbare Weise aufpassbar ist, versehen mit einer Nut (62), die den äußeren Anschluss (34b) abschneidet bzw. unterbricht, und eine Düse (66) umfasst, die mit einem Auslassdurchgang (68) zu der äußeren Umgebung hin versehen ist.

5. Flanschanordnung nach einem der vorhergehenden Ansprüche und Anspruch 2, wobei sich der erste Abschnitt (32) entlang einer ersten Abschnittsachse erstreckt und sich der zweite Abschnitt (34) entlang einer zweiten Abschnittsachse erstreckt, die mit der ersten Abschnittsachse zusammenfällt.

6. Flanschanordnung nach Anspruch 5, wobei der erste Abschnitt (32) einen Dichtungsabschnitt (32b) mit einem ersten Durchmesser und einen Durchgangsabschnitt (32c) mit einem zweiten Durchmesser umfasst, wobei der zweite Durchmesser größer als der erste Durchmesser ist.

7. Flanschanordnung nach Anspruch 5 oder 6, wobei der Flanschkörper (12) einen Montagesitz (36) aufweist, der sich entlang der Achse des ersten Abschnitts nach oben erstreckt, um in die äußere Umgebung zu führen.

8. Flanschanordnung nach den Ansprüchen 6 und 7, wobei die thermische Sicherheitsvorrichtung (14) umfasst:
- einen Kolben (50) mit einem Funktionsabschnitt (52), der dichtend in dem Dichtungsabschnitt (32b) des ersten Abschnitts (32) gleitet;
- eine temperaturempfindliche Komponente (54), die so kalibriert ist, dass sie nachgibt, wenn die Referenztemperatur den vordefinierten Schwellenwert überschreitet, wobei die Komponente (54) in Kontakt mit dem Kolben (50) auf der gegenüberliegenden bzw. entgegengesetzten Seite des Funktionsabschnitts (52) angeordnet ist;
- einen festen Anschlag (56), der an dem Flanschkörper (12) befestigt ist, um die Komponente (54) in Kontakt mit dem Kolben (50) zu halten.

9. Flanschanordnung nach einem der vorhergehenden Ansprüche und Anspruch 7 und enthaltend einen herausziehbaren Patronenkörper, wobei:
- der erste Abschnitt (32) des Hauptkanals und der Montagesitz (36) in dem herausziehbaren Patronenkörper enthalten sind, der in ein Durchgangsloch des Flanschkörpers (12) einsetzbar ist;
- der zweite Abschnitt (34) des Hauptkanals zumindest teilweise in dem Flanschkörper (12) ausgebildet ist.

10. Flanschanordnung nach einem der vorhergehenden Ansprüche, wobei der Flanschkörper (12) einen Verbindungsabschnitt (18) zur Verbindung mit der Tanköffnung (6, 8) des Tanks (1) umfasst, umfassend eine Verbindungswand (20) und einen Schlitz (22) neben der Verbindungswand (20).

11. Tank (1) zum Speichern von Hochdruckwasserstoff an Bord von Fahrzeugen, umfassend:
- eine erste Öffnung (6); und
- eine Flanschanordnung (10) nach einem der vorhergehenden Ansprüche, angewandt an der ersten Öffnung (6).

12. Tank nach Anspruch 11, wobei der Flanschkörper (12) der Flanschanordnung (10) ein weiteres Durchgangsloch für die Anwendung eines Multifunktionsventils aufweist.

13. Tank nach Anspruch 11, umfassend:
- eine zweite Öffnung (8); und
- einen Flansch für die Anwendung eines Multifunktionsventils, angewandt an der zweiten Öffnung (8).

## Revendications

1. Ensemble bride (10) qui est applicable sur une embouchure (6, 8) de réservoir d'un réservoir d'hydrogène haute pression, comprenant un corps de bride (12) et un dispositif de sécurité thermique (14) étalonné à une valeur seuil prédéfinie d'une température de référence, dans lequel le corps de bride (12) a un conduit principal (32, 34) configuré pour mettre un compartiment de réservoir (4) du réservoir (1) en communication avec l'environnement hors du réservoir (1) par le biais d'un orifice extérieur (34b) placé sur une partie fonctionnelle (24) du corps de bride (12) et le dispositif de sécurité thermique (14) est au moins partiellement logé dans ledit conduit principal, de sorte que
- dans une configuration de repos, dans laquelle la température de référence est plus basse que la valeur seuil prédéfinie, ledit dispositif de sécurité thermique intercepte le conduit principal et empêche le gaz de transiter jusqu'à l'environnement externe ;
- dans une configuration d'activation, dans laquelle la température de référence est plus élevée que la valeur seuil prédéfinie, le dispositif de sécurité thermique (14) crée un passage dans le conduit principal (32, 34) pour que le gaz transite vers l'environnement externe par le biais de l'orifice extérieur (34b) ;
**caractérisé en ce qu'**il comprend en outre un ensemble col (16) qui intercepte l'orifice extérieur (34b) et est orientable pour diriger l'écoulement de gaz sortant de l'orifice extérieur (34b).

2. Ensemble bride (10) selon la revendication 1, dans lequel le conduit principal (32, 34) a une première section (32) qui commence à partir d'une extrémité intérieure (12a) du corps de bride (12) avec un orifice intérieur (32a), et une seconde section (34), reliée à la première section (32) et émergeant à l'extérieur avec ledit orifice extérieur (34b) placé sur la partie fonctionnelle (24) du corps de bride (12).

3. Ensemble bride selon la revendication 2, dans lequel la partie fonctionnelle (24) a deux sièges d'étanchéité (26, 28) annulaires espacés axialement dans lesquels des joints toriques (26a, 28a) respectifs sont logés, et dans lequel ledit orifice extérieur (34b) est agencé entre les sièges d'étanchéité (26, 28).

4. Ensemble bride selon la revendication 3, dans lequel l'ensemble col (16) comprend un col (60) qui peut être ajusté sur la partie fonctionnelle (24) d'une manière orientable, doté d'une rainure (62) qui intercepte l'orifice extérieur (34b) et d'une buse (66) dotée d'un passage d'évacuation (68) vers l'environnement externe.

5. Ensemble bride selon l'une quelconque des revendications précédentes et la revendication 2, dans lequel la première section (32) s'étend le long d'un premier axe de section et la seconde section (34) s'étend le long d'un second axe de section, incident au premier axe de section.

6. Ensemble bride selon la revendication 5, dans lequel la première section (32) comprend une section d'étanchéité (32b) ayant un premier diamètre et une section de transit (32c) ayant un second diamètre, dans lequel le second diamètre est plus grand que le premier diamètre.

7. Ensemble bride selon la revendication 5 ou 6, dans lequel le corps de bride (12) a un siège de montage (36) qui s'étend le long dudit premier axe de section jusqu'à mener dans l'environnement externe.

8. Ensemble bride selon les revendications 6 et 7, dans lequel le dispositif de sécurité thermique (14) comprend :
- un piston (50) ayant une partie fonctionnelle (52) qui coulisse de manière étanche dans la section d'étanchéité (32b) de la première section (32) ;
- un élément (54) sensible à la température, étalonné pour intervenir lorsque la température de référence dépasse la valeur seuil prédéfinie, ledit élément (54) étant agencé en contact avec le piston (50), sur le côté opposé de la partie fonctionnelle (52) ;
- une butée fixe (56), fixée au corps de bride (12) de manière à garder l'élément (54) en contact avec le piston (50).

9. Ensemble bride selon l'une quelconque des revendications précédentes et la revendication 7 et comportant un corps de cartouche extractible, dans lequel :
- la première section (32) du conduit principal et le siège de montage (36) sont obtenus dans le corps de cartouche extractible, qui est insérable dans un trou débouchant du corps de bride (12) ;
- la seconde section (34) du conduit principal est au moins partiellement créée dans le corps de bride (12).

10. Ensemble bride selon l'une quelconque des revendications précédentes, dans lequel le corps de bride (12) comprend une partie de liaison (18) pour la liaison à l'embouchure (6, 8) de réservoir du réservoir (1), comprenant une paroi de liaison (20) et une fente (22) près de la paroi de liaison (20).

11. Réservoir (1) pour stocker de l'hydrogène haute pression à bord de véhicules, comprenant :
- une première embouchure (6) ; et
- un ensemble bride (10) selon l'une quelconque des revendications précédentes, appliqué sur la première embouchure (6).

12. Réservoir selon la revendication 11, dans lequel le corps de bride (12) de l'ensemble bride (10) a un autre trou découchant pour l'application d'une soupape multifonction.

13. Réservoir selon la revendication 11, comprenant :
- une seconde embouchure (8) ; et
- une bride pour l'application d'une soupape multifonction, appliquée sur la seconde embouchure (8).
